# EUROPEAN PATENT APPLICATION

(11) **EP 2 615 670 A1**
(43) Date of publication of application: **17.07.2013**
(21) Application number: 11823511.8
(22) Date of filing: 05.09.2011
(51) Int. Cl.: H01M 4/131, H01M 4/505, H01M 4/62, H01M 10/052, H01M 10/0568

(54) **LITHIUM ION SECONDARY BATTERY**

(30) Priority: 24.08.2011 JP 2011182092; 06.09.2010 JP 2010198762
(71) Applicant: Shin-Kobe Electric Machinery Co., Ltd., Tokyo 104-0044 (JP)
(72) Inventor: TSUJIKAWA, Tomonobu, Tokyo 108-0023 (JP); ARAKAWA, Masayasu, Tokyo 110-0015 (JP); MIYAMOTO, Yoshiki, Tokyo 104-0044 (JP); HAYASHI, Koji, Tokyo 104-0044 (JP); NAKAHARA, Masaki, Tokyo 104-0044 (JP)
(74) Representative: Schiweck, Weinzierl & Koch
(86) International application number: PCT/JP2011/070124
(87) International publication number: WO 2012/033036

(57) **Abstract**

A lithium-ion secondary battery capable of securing safety at a time of battery abnormality and restricting a drop in a high rate discharge property is provided. A lithium-ion secondary battery 1 has an electrode group 5 formed by winding a positive electrode plate 2 in which a positive electrode mixture including a positive electrode active material is formed at a collector and a negative electrode plate 3 in which a negative electrode mixture including a negative electrode active material is formed at a collector via a porous separator 4. A flame retardant is mixed to the positive electrode mixture of the positive electrode plate 2. The mode of pore diameters formed at the positive electrode mixture, which is measured by a mercury porosimetry, is set to a range of from 0.5 to 2.0µm. The moving path for lithium-ions and at the same time the moving path for electrons are secured at a charge/discharge time.

## Description

### FIELD OF THE INVENTION

The present invention relates to a lithium-ion secondary battery, and more particularly to a lithium-ion secondary battery that an electrode group which a positive electrode having a positive electrode mixture containing a positive electrode active material and a negative electrode having a negative electrode mixture containing a negative electrode active material are disposed via a separator is infiltrated by a non-aqueous electrolyte which a lithium salt is mixed into an organic solvent to be accommodated into a battery container.

### DESCRIPTON OF RELATED ART

A lithium-ion secondary battery enables miniaturization and lightening of a power source because of its high energy density. For this reason, it is being used not only as a small power source for mobile use but as a power source for electric vehicles. Further, it is being used for utilizing nature energy such as sunshine, wind force or the like as well as for leveling in use of electric power, and it is also being developed as a power source for industrial use such as an uninterruptible power supply apparatus or a construction machine.

In such a lithium-ion secondary battery, when it is exposed under a high temperature environment at a time of battery abnormality such as overcharge or the like, a battery constituting material such as a non-aqueous electrolyte or the like is likely to burn. Further, oxygen generated by a thermal decomposition reaction of a positive electrode active material is likely to accelerate burning of the battery constituting material. In order to avoid such a situation to secure safety of the battery, various safety technologies have been proposed. Namely, a technology of making a non-aqueous electrolyte non-flammable (flameproof) by adding a flame retardant to the non-aqueous electrolyte (See, e.g., JPA 2006-286571, Journal of Electrochemical Society, Volume 149, Issue 5, pp. A622 to A626 (2002)) and a technology of restricting acceleration in burning of a battery constituting material by mixing a flame retardant to a positive electrode mixture (See, e.g., JPA 2009-016106) have been disclosed.

### SUMMARY OF THE INVENTION

### [Problem to be solved by the Invention]

However, both safety of a battery and battery performance are required at the same time to utilize a lithium-ion secondary battery in industry. To this request, the technology disclosed in JPA 2006-286571 or Journal of Electrochemical Society can make the non-aqueous electrolyte non-flammable (flameproof) because of adding the flame retardant to the non-aqueous electrolyte, but an output property or a high rate discharge property is likely to be lowered because ionic conductivity in the non-aqueous electrolyte drops. Further, the technology disclosed in JPA 2009-016106 can restrict acceleration in burning of the battery constituting material because of mixing the flame retardant to the positive electrode mixture, but an output property or a high rate discharge property is likely to be lowered. Namely, because a voltage drop becomes large in a case of large current discharge comparing with that of small current discharge due to mixing of the flame retardant, a capacity at the time of large current discharge becomes smaller than that at the time of small current discharge. For this reason, no lithium-ion secondary battery in which the flame retardant is mixed to the positive electrode mixture appears in the market at present. Inventors, after making an elaborate study on a mechanism of the drop in the high rate discharge property in a case of mixing a flame retardant to a positive/negative electrode mixture, found that electron conductivity in a positive electrode is hampered due to mixing of the flame retardant which has an insulation property originally.

In view of the above circumstances, an object of the present invention is to provide a lithium-ion secondary battery capable of securing safety at a time of battery abnormality and restricting a drop in a high rate discharge property.

### [Means for solving the Problem]

In order to achieve the above object, the present invention is directed to a lithium-ion secondary battery that an electrode group which a positive electrode having a positive electrode mixture containing a positive electrode active material and a negative electrode having a negative electrode mixture containing a negative electrode active material are disposed via a separator is infiltrated by a non-aqueous electrolyte which a lithium salt is mixed into an organic solvent to be accommodated into a battery container, wherein a flame retardant is mixed to the positive electrode mixture, and wherein a mode of diameters of pores formed at the positive electrode mixture ranges from 0.5µm to 2.0µm.

In the present invention, it is preferable that the mode of diameters of pores formed at the positive electrode mixture ranges from 1.0µm to 1.6µm. Further, the positive electrode active material may include lithium manganate having a spinel crystal structure. At this time, an average diameter of secondaryparticles in the positive electrode active material may be 20µm or more. The positive electrode plate may have the positive electrode mixture at one side or both sides of a positive electrode collector, anda thickness of the positive electrode mixture may range from 30µm to 100µm per one side of the positive electrode collector. At this time, the mode of diameters of pores formed at the positive electrode mixture may range from 1. 3µm to 1.6µm. It is preferable that the flame retardant is a cyclic phosphazene compound having a solid state under a room temperature. The phosphazene compound can be mixed at a range of from 2wt% to 6wt% to the positive electrode mixture. Further, the lithium salt may be lithium tetrafluoroborate, and a density of the lithium salt may range from 1.5M to 1.8M.

### [Effects of the Invention]

According to the present invention, effects can be obtained that, since the flame retardant is mixed to the positive electrode mixture, the flame retardant can restrict burning of a battery constituting material when a battery temperature increases due to battery abnormality, and even the flame retardant is mixed to the positive electrode mixture, since the mode of diameters of pores formed at the positive electrode mixture is set to a range of from 0.5µm to 2.0µm, because a movement path for lithium-ions can be secured at a charge/discharge time and at the same time a movement path for electrons in the active material and between the active material and a collector are strengthened, a high rate discharge property can be maintained.

### BRIEF DESCRIPTION OF THE DRAWINGS

Fig. 1 is a sectional view of a cylindrical lithium-ion secondary battery of an embodiment to which the present invention is applicable;
Fig. 2 is a graph showing a relationship between a mode of pore diameters at a positive electrode mixture and a percentage of a discharge capacity at a 3.0CA discharge time to a discharge capacity at a 0.2CAdischarge time in a lithium-ion secondary battery of Example 1;
Fig. 3 is a graph showing a relationship between a mode of pore diameters at a positive electrode mixture and a percentage of a discharge capacity at a 3.0CA discharge time to a discharge capacity at a 0.2CAdischarge time in a lithium-ion secondary battery of Example 2;
Fig. 4 is a graph showing a relationship between a mode of pore diameters at a positive electrode mixture and a percentage of a discharge capacity at a 3.0CA discharge time to a discharge capacity at a 0.2CAdischarge time in a lithium-ion secondary battery of Example 3;
Fig. 5 is a graph showing a relationship between a mode of pore diameters at a positive electrode mixture and a percentage of a discharge capacity at a 3.0CA discharge time to a discharge capacity at a 0.2CA discharge time in a lithium-ion secondarybattery of Example 4;
Fig. 6 is a graph showing a relationship between a mode of pore diameters at a positive electrode mixture and a percentage of a discharge capacity at a 3.0CA discharge time to a discharge capacity at a 0.2CAdischarge time in a lithium-ion secondary battery of Example 5;
Fig. 7 is a graph showing a relationship between an average diameter of secondary particles of a positive electrode active material and a percentage of a discharge capacity at a 3.0CA discharge time to a discharge capacity at a 0.2CA discharge time in a lithium-ion secondary battery of Example 6; and
Fig. 8 is a sectional view of a nailing/collapse jig used for a nailing/collapse test on a lithium-ion secondary battery of Example 7.

### DETAILED DESCRIPTION OF THE PREFERRED EMBODIMENTS

With reference to the drawings, an embodiment in which the present invention is applied to a cylindrical lithium-ion secondary battery (lithium-ion secondary battery) of 18650 type will be explained below.

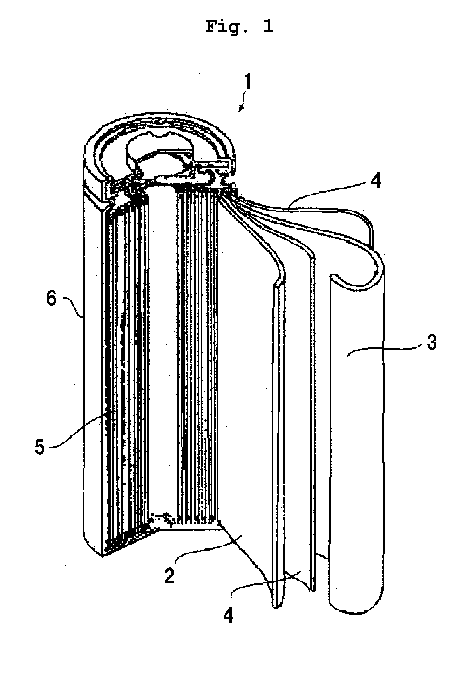

As shown in Fig. 1, a lithium-ion secondary battery 1 of this embodiment has a cylindrical battery container 6 made of nickel plated steel and having a bottom. An electrode group 5 which is formed by winding a strip-shapedpositive electrode plate 2 and a strip-shaped negative electrode plate 3 spirally in a cross section through a separator 4 is accommodated in the battery container 6.

The electrode group 5 is formed by winding the positive electrode plate 2 and the negative electrode plate 3 spirally in a cross section through a porous separator 4 made of polyethylene. In this embodiment, each of the separators 4 is set to have a width of 58mm and a thickness of 30µm. A ribbon shaped positive electrode tab terminal made of aluminum of which one end portion is fixed to the positive electrode plate 2 is led from an upper end face of the electrode group 5. Another end portion of the positive electrode tab terminal is welded by ultrasonic welding to a bottom surface of a disc shaped battery lid which is disposed at an upper side of the electrode group 5 and which functions as a positive electrode external terminal.

On the other hand, a ribbon shaped negative electrode tab terminal made of copper of which one end portion is fixed to the negative electrode plate 3 is led from a lower end face of the electrode group 5. Another end portion of the negative electrode tab terminal is welded by resistance welding to an inner bottom portion of the battery container 6. Accordingly, the positive electrode tab terminal and the negative electrode tab terminal are respectively led from both end faces opposed to each other with respect to the electrode group 5. Incidentally, unillustrated insulating covering is applied to the entire circumference of the electrode group 5.

The battery lid is fixed by performing caulking via an insulation gasket made of resin at an upper portion of the battery container 6. For this reason, an interior of the lithium-ion secondary battery 1 is sealed. Further, an unillustrated non-aqueous electrolyte (electrolytic solution) is injected to the battery container 6. The non-aqueous electrolyte is formed, for example, by dissolving lithium tetrafluoroborate as a lithium salt into a carbonate-based mixed solvent of ethylene carbonate (EC) and dimethyl carbonate (DMC) mixed at a volume ratio of 2:3. A density of the lithium salt in the non-aqueous electrolyte may be set to a range of from 1.5 to 1.8 mole/litter (M), and set to 1. 5M in this embodiment. Incidentally, it is difficult in general to set the density of the lithium salt in the non-aqueous electrolyte to 2M or more because of dissolving limitation of the lithium salt to the solvent. A liquid state phosphazene compound of which main constituents are phosphorus and nitrogen is contained in this non-aqueous electrolyte as a flame retardant. A containing percentage of the flame retardant in the non-aqueous electrolyte is set to 15 volume% in this embodiment.

The phosphazene compound is a cyclic compound expressed by a general formula of (NPR¹R²)₃ or (NPR¹R²)₄. R¹, R² in the general formula express univalent substituent, respectively. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, arylthio group such as phenylthio group, and halogen group may be listed. Such a phosphazene compound has a solid state or liquid state according to kinds of the substituents R¹, R². A phosphazene compound having a liquid state at a room temperature is used for the phosphazene compound contained in the non-aqueous electrolyte.

The positive electrode plate 2 constituting the electrode group 5 has an aluminum foil or aluminum alloy foil as a positive electrode collector. A thickness of the positive electrode collector is set to 20µm in this embodiment. The positive tab terminal is welded by ultrasonic welding to an approximately central portion in a longitudinal direction of the positive electrode collector in the positive electrode plate 2. The positive electrode plate is formed by applying a positive electrode mixture including a lithium transition metal complex oxide as a positive electrode active material approximately uniformly to both surfaces of the positive electrode collector.

Various kinds of lithium transition metal complex oxides known in general may be used for such a lithium transition metal complex oxide. In this embodiment, lithium manganate powder having a spinel crystal structure is used for the lithium transition metal complex oxide. The lithium manganate powder having a spinel crystal structure is formed by secondary particles which are coagulated by primary particles. An average diameter of secondary particles thereof is larger among conventional lithium manganate powders and it is set to 20µm or more. In this embodiment, an average diameter of the secondary particles is set to 25µm is used for the lithium manganate powder. The lithium manganate powder in which the average diameter of secondary particles is larger than 20µm can reduce a surface area to a volume comparing with the lithium manganate powder in which the average diameter of secondary particles is less than 20µm, and accordingly electrical resistance can be lowered even if an amount of a conductive material is small. Especially, it is advantageous in compensating for conductivity in a case that a solid state flame retardant of an insulatingmaterial is mixed to the positive electrode mixture. Further, a life property can be improved because elution of manganate is small. In the positive electrode mixture, for example, to 84wt% of the lithium transition metal complex oxide, 5wt% of scale graphite as a conductive material, 7wt% of polyvinylidene fluoride (hereinafter abbreviated as PVDF) and a powder state (solid state) phosphazene compound as a flame retardant are mixed. The phosphazene compound can be mixed in a range of from 2 to 6wt% to the positive electrode mixture, and in this embodiment, it is adjusted to 4wt%.

A cyclic compound expressed by the same general formula of (NPR¹R²)₃ or (NPR¹R²) as the phosphazene compound contained in the non-aqueous electrolyte and having a solid state at a room temperature is used for the phosphazene compound mixed to the positive electrode mixture. Namely, a phosphazene compound of which molecular structure of a cyclic portion is the same as the phosphazene compound contained in the non-aqueous electrolyte and of which substituents R¹, R² are different is used for the phosphazene compound mixed to the positive electrode mixture.

When the positive electrode mixture is applied to the positive electrode collector, a slurry that the positive electrode mixture is dispersed to N-methyl-2-pyrolidone (hereinafter abbreviated as NMP) of a viscosity adjusting solvent is produced. At this time, the dispersion is stirred by a mixing machine equipped with rotary vanes. The obtained slurry is applied to the positive electrode collector by a roll-to-roll transfer method. The positive electrode plate 2, after drying, is pressed and then cut to have a width of 54mm so formed as a strip shape. A thickness of the positive electrode mixture can be adjusted by a press pressure (load) at press working. In this embodiment, the thickness is set to a range of from 30 to 100µm as per one surface of the positive electrode collector.

Gaps between the particles, namely pores are formed at the positive electrode mixture. A diameter of pores can be controlled by adjusting a load at the time of press working and a gap between press rollers. The diameter of pores is measured by a mercury porosimetry and a mode of the pore diameters is set to a range of from 0.5 to 2.0µm. The mercury porosimetry is an apparatus for measuring a pore distribution of a porous solid body by a mercury penetration method. Incidentally, in measuring the pore diameters, any apparatus capable of measuring a value range corresponding to the range of from 0.5 to 2.0µm for the mode of pore diameters measured by using the mercury porosimetry may be used other than the mercury porosimetry.

On the other hand, the negative electrode plate 3 has a rolled copper foil or rolled copper alloy foil as a negative electrode collector. A thickness of the negative electrode collector is set to 10µm in this embodiment. The negative tab terminal is welded by ultrasonic welding to an end portion of one side in a longitudinal direction of the negative electrode collector in the negative electrode plate 3. The negative electrode plate is formed by applying a negative electrode mixture including amorphous carbon powder in/from which lithium-ions can be occluded/released as a negative electrode active material approximately uniformly to both surfaces of the negative electrode collector.

In the negative electrode mixture, for example, PVDF of a binder is mixed other than the negative electrode active material. A mass (weight) percentage between the negative electrode active material and PVDF can be set, for example, to 90 : 10. When the negative electrode mixture is applied to the negative electrode collector, a slurry that the negative electrode mixture is dispersed to NMP of a viscosity adjusting solvent is produced. At this time, the dispersion is stirred by a mixing machine equipped with rotary vanes. The obtained slurry is applied to the negative electrode collector by a roll-to-roll transfer method. The negative electrode plate 3, after drying, is pressed and then cut to have a width of 56mm so formed as a strip shape.

Incidentally, a length of the negative electrode plate 3 is set, when the positive electrode plate 2, the negative electrode plate 3 and the separators 4 are wound, 6mm longer than that of the positive electrode plate 2 such that the positive electrode plate 2 does not go beyond the negative electrode plate 3 in a winding direction at innermost and outermost winding circumferences.

### (Examples)

Next, Examples of the lithium-ion secondary battery 1 manufactured according to the above embodiment will be explained.

### (Example 1)

In Example 1, as shown in Table 1 below, the phosphazene compound (made by BRIDGESTONE CORP., Product Name: Phoslight (Registered Trademark), liquid state) of a flame retardant was mixed at 15 volume% into the non-aqueous electrolyte of which lithium salt density is 1.0M. The positive electrode mixture was formed by mixing 4wt% of the phosphazene compound (made by BRIDGESTONE CORP., Product Name: Phoslight (Registered Trademark), solid state) of a flame retardant, 84wt% of lithium manganate powder of a positive electrode active material, 5wt% of scale graphite and 7wt% of PVDF. A mode of pore diameters formed at the positive electrode mixture was measured by using a mercury porosimetry (SHIMADZU CORPORATION, Autopore IV 9520) to manufacture the lithium-ion secondary battery 1 in which the mode of pore diameters formed at the positive electrode mixture was set to 0.5µm. In the same process, a plurality of lithium-ion secondary batteries of which mode of pore diameters formed at the positive electrode mixture is different were manufactured. The modes at the positive electrode mixture in these lithium-ion secondary batteries were 0.7µm, 1.0µm, 1.3µm, 1.5µm, 2.0µm, 3.7µm and 4.8µm, respectively. Table 1 shows the lithium salt density in the non-aqueous electrolyte, existence or nonexistence of the flame retardant in the non-aqueous electrolyte and the mixing percentage of the flame retardant at the positive electrode mixture.

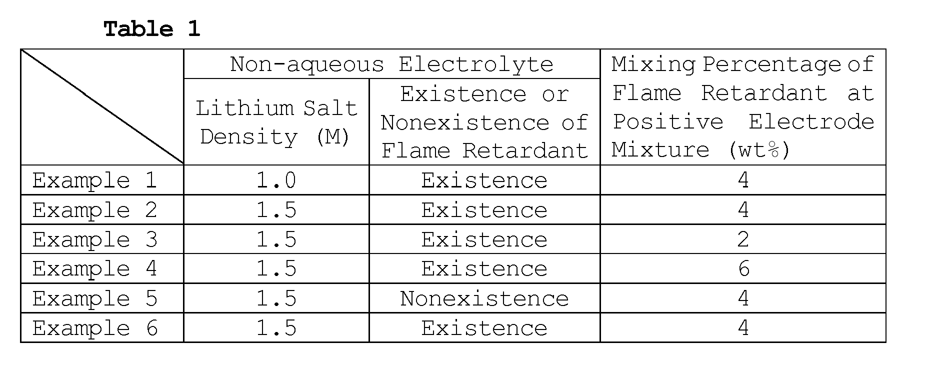

### (Example 2)

As shown in Table 1, in Example 2, a plurality of lithium-ion secondary batteries of which mode of pore diameters formed at the positive electrode mixture is different were manufactured in the same manner as Example 1 except that the non-aqueous electrolyte of which lithium salt density is 1.5M was used. The modes of pore diameters at the positive electrode mixture in these lithium-ion secondary batteries were 0.5µm, 0.6µm, 0.9µm, 1.3µm, 1.6µm, 2.0µm, 2.3µm and 3.2µm, respectively.

### (Example 3)

As shown in Table 1, in Example 3, a plurality of lithium-ion secondary batteries of which mode of pore diameters formed at the positive electrode mixture is different were manufactured in the same manner as Example 1 except that the non-aqueous electrolyte of which lithium salt density is 1.5M was used and 2wt% of the phosphazene compound was mixed to the positive electrode mixture. The modes of pore diameters at the positive electrode mixture in these lithium-ion secondary batteries were 0.5µm, 1.0µm, 1.3µm, 1.9µm, 2.0µm, 2.2µm, 2.8µm and 3.0µm, respectively.

### (Example 4)

As shown in Table 1, in Example 4, a plurality of lithium-ion secondary batteries of which mode of pore diameters formed at the positive electrode mixture is different were manufactured in the same manner as Example 1 except that the non-aqueous electrolyte of which lithium salt density is 1.5M was used and 6wt% of the phosphazene compound was mixed to the positive electrode mixture. The modes of pore diameters at the positive electrode mixture in these lithium-ion secondary batteries were 0. 2 µm, 0.3µm, 0.5µm, 1.3µm, 1.6µm, 1.9µm, 2.0µm and 2.3µm, respectively.

### (Example 5)

As shown in Table 1, in Example 5, a plurality of lithium-ion secondary batteries of which mode of pore diameters formed at the positive electrode mixture is different were manufactured in the same manner as Example 1 except that the non-aqueous electrolyte of which lithium salt density is 1.5M was used and the phosphazene compound was not mixed to the non-aqueous electrolyte. The modes of pore diameters at the positive electrode mixture in these lithium-ion secondary batteries were 0.5µm, 0.6µm, 1.0µm, 1.5µm, 1.8µm, 2.0µm, 2.3µm and 3.1µm, respectively.

### (Example 6)

In Example 6, a plurality of lithium-ion secondary batteries 1 of which average diameter of secondaryparticles in lithiummanganate powder is different were manufactured by sieving the lithiummanganate powder of a positive electrode active material to separate/classify average diameters of secondary particles thereof to 10µm, 15µm, 17µm, 18µm, 20µm, 25µm and 30µm, respectively. Each mode of pore diameters formed at the positive electrode mixture in these lithium-ion secondary batteries 1 was 1.3µm. As shown in Table 1, all of the lithium salt density in the non-aqueous electrolyte, existence or nonexistence of the flame retardant in the non-aqueous electrolyte and the mixing percentage of the flame retardant at the positive electrode mixture were the same as Example 2.

### (Example 7)

In Example 7, a lithium-ion secondary battery for evaluation (10Ah class) of which type is different from the above embodiment was manufactured to evaluate safety of a lithium-ion secondarybattery. Namely, the battery of Example 7 is a lithium-ion secondary battery equipped with an electrode group which is formed by laminating each of rectangular positive electrode plates and rectangular negative electrode plates. As shown in Table 2 below, constitution of the positive electrode mixture, the negative electrode mixture, the non-aqueous electrolyte and the like was the same as that of Example 5, and the mode of pore diameters formed at the positive electrode mixture was set to 1.3µm. Each of the positive electrode plates and the negative electrode plates were cut so as to have a size of 150mm x 145mm for a positive electrode mixture applying portion and a size of 154mm x 149mm for a negative electrode mixture applying portion, respectively. Each positive electrode plate was sandwiched by (inserted to) a tube-shaped separator of which two sides had been melted to bond with each other by a soldering iron, and then one side of two sides which had not been melted was melted to bond with each other by a soldering iron. Each of 15 positive electrode plates each sandwiched by the separator and 16 negative electrode plates were laminated alternatively to manufacture the electrode group. After welding each electrode tab of the electrode group and each terminal plate by ultrasonic welding, the electrode group was inserted into a laminate sack, and then three sides thereof were melted thermally to bond with each other. After the electrode group and the laminate sack were dried for 72 hours at a temperature of 60 deg. C., the non-aqueous electrolyte was injected into the laminate sack. After injecting the electrolyte, the laminate sack was vacuumed up in order to melt remaining one side thereof thermally to bond with each other for sealing. The obtained lithium-ion secondary battery for evaluation was left as it is for one night to infiltrate the non-aqueous electrolyte into the electrode group.

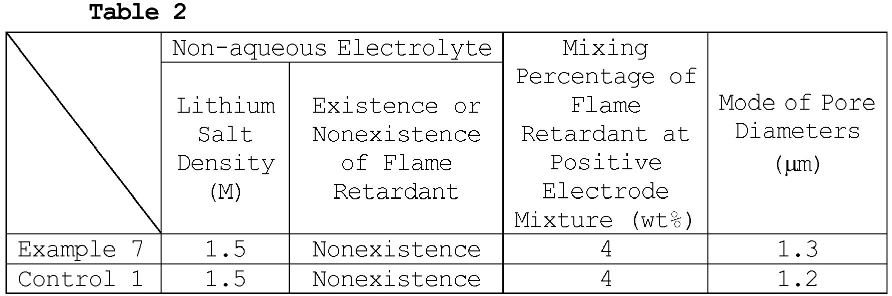

### (Control 1)

As shown in Table 2, in Control 1, a lithium-ion secondary battery for evaluation was manufactured in the same manner as Example 7 except that the mode of pore diameters at the positive electrode mixture was set to 1.2µm.

### (Test 1)

A discharge test under 0.2CA and 3.0CA was carried out with respect to each lithium-ion secondary battery of which mode of pore diameters formed at the positive electrode mixture is different and which were manufactured according to Examples 1 to 5. Each percentage (relative capacity percentage) of a discharge capacity measured at a 3.0CA discharge time to a discharge capacity measured at a 0.2CA discharge time was calculated.

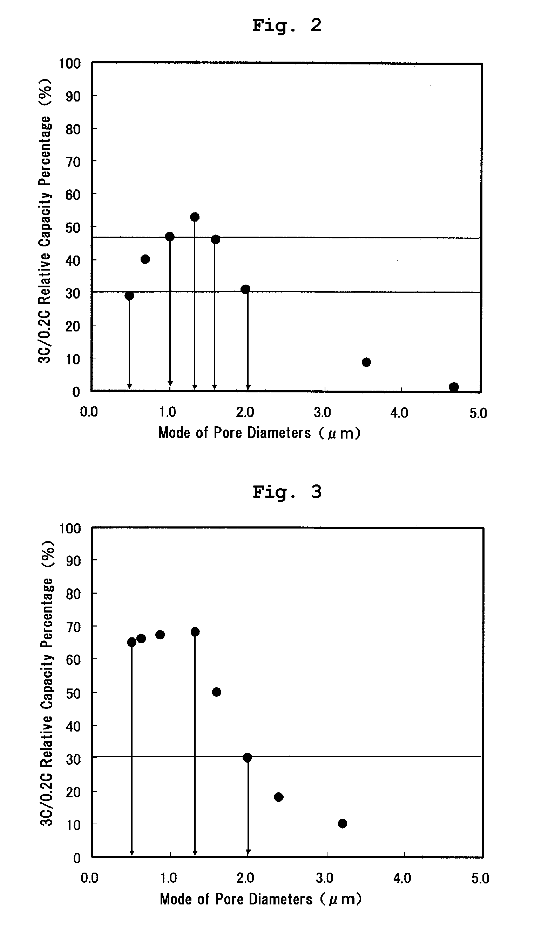

As shown in Fig. 2, Example 1 in which the non-aqueous electrolyte of which lithium salt density is 1.0M was used exhibited that the relative capacity percentage is 30% or more when the mode of pore diameters formed at the positive electrode mixture falls into a range of from 0.5 to 2.0µm and exhibited that the relative capacity percentage is 40% or more when the mode of pore diameters falls into a range of from 0.7 to 1.5µm. Further, when the mode of pore diameters is 1.3µm, the relative capacity percentage exhibited a maximum value of 53%. When the mode of pore diameters exceeds 2.0µm, the relative capacity percentage dropped. From the above, it was found that the high rate discharge property can be maintained when the mode of pore diameters falls into the range of 0.5 to 2.0µm in which the relative capacity percentage exhibited 30% or more. It was also found that it is preferable to set the relative capacity percentage to a percentage exceeding 45%, namely, set the mode of pore diameters to the range of from 1.0 to 1.5µm in order to improve the high rate discharge property more.

As shown in Fig. 3, Example 2 in which the non-aqueous electrolyte of which lithium salt density is 1. 5M was used exhibited that the relative capacity percentage is 30% or more when the mode of pore diameters formed at the positive electrode mixture falls into a range of from 0.5 to 2.0µm. When the mode of pore diameters is 1.3µm, the relative capacity percentage exhibited a maximum value of 68%, which was higher than that of 53% in Example 1. Further, Example 1 exhibited a higher value than Example 2 in the relative capacity percentage when the mode of pore diameters is less than 1.3µm. (See also Fig. 2.) This reason is considered that the number of movable lithium-ions is increased because the lithium salt density in Example 1 is higher than that that in Example 2. As the mode of pore diameter larger, the relative capacity percentage dropped more. From the above, it was found that the high rate discharge property of the lithium-ion secondary battery 1 is improved more as the number of lithium-ions in the non-aqueous electrolyte is larger. Further, it was found that the high rate discharge property can be maintained when the mode of pore diameters falls into the range of 0.5 to 2.0µm in which the relative capacity percentage exhibited 30% or more. It was also found that it is preferable to set the relative capacity percentage to a percentage exceeding 50%, namely, set the mode of pore diameters to the range of from 0.5 to 1.6µm in order to improve the high rate discharge property more.

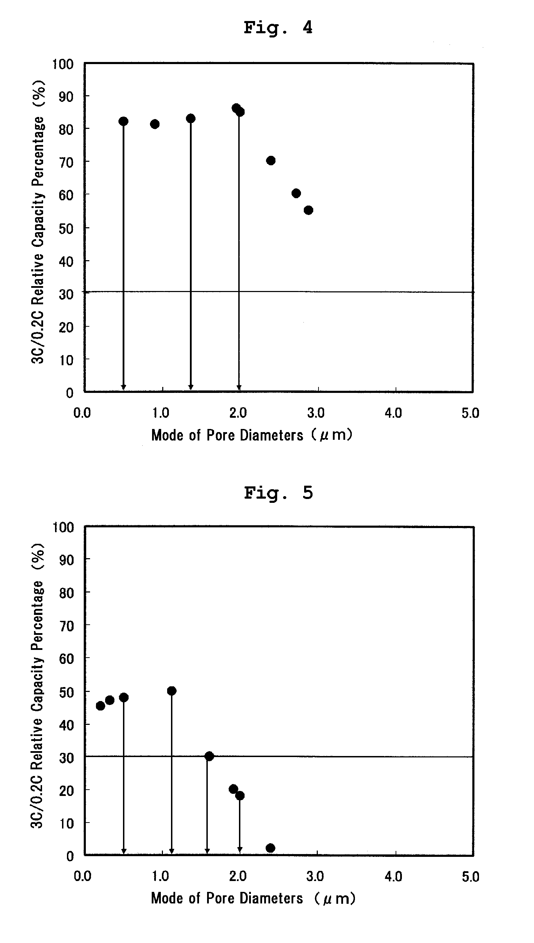

As shown in Fig. 4, Example 3 in which the mixing percentage of the flame retardant at the positive electrode mixture was set to 2wt% exhibited the relative capacity percentage in a case that the mode of pore diameters exceeds 1.3µm a higher value than that in Example 2. This is considered that electron conductivity was heightened because the mixing percentage of the flame retardant at the positive electrode mixture in Example 3 is smaller than that in Example 2. Because Example 3 exhibited that the relative capacity percentage is about 80% when the mode of pore diameters falls into the range of from 0.5 to 2.0µm, it was found that the high rate discharge property can be maintained in this range.

As shown in Fig. 5, Example 4 in which the mixing percentage of the flame retardant at the positive electrode mixture was set to 6wt% exhibited the relative capacity percentage a maximum value of 50% when the mode of pore diameters is 1.3µm, which was lower than that of 68% in Example 2. This is considered that electron conductivity was hampered because the mixing percentage of the flame retardant at the positive electrode mixture in Example 4 is larger than that in Example 2. For this reason, in Example 4 in which the mixing percentage of the flame retardant at the positive electrode mixture is higher than that in Examples 1 to 3, the range of the mode of pore diameters that the high rate discharge property can be maintained preferably is limited comparing with Examples 1 to 3. Namely, it was found that, in Example 4, the high rate discharge property can be maintained at the range that the relative capacity percentage is 30% or more, that is, the range that the mode of pore diameters is from 0.5 to 1.6µm.

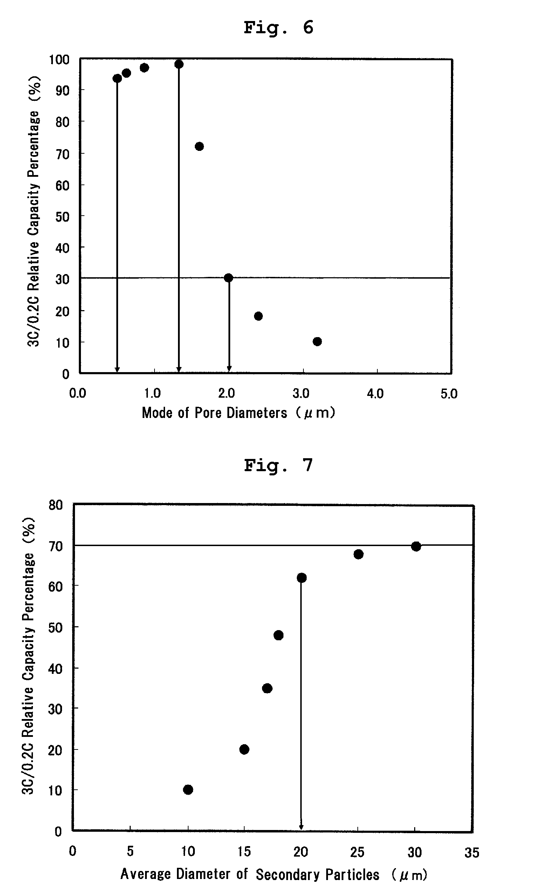

As shown in Fig. 6, Example 5 in which the flame retardant was not mixed to the non-aqueous electrolyte exhibited the relative capacity percentage a maximum value of 98% when the mode of pore diameters is 1.5µm, which was higher than that of 68% in Example 2. This is considered that the movement of lithium-ions was not hampered because the flame retardant was not mixed to the non-aqueous electrolyte in Example 5. As the mode of pore diameters becomes larger, the relative capacity percentage dropped more. Because Example 5 exhibited that the relative capacity percentage is 30% or more when the mode of pore diameters falls into the range of from 0.5 to 2.0µm, it was found that the high rate discharge property can be maintained in this range. It was also found that it is preferable to set the relative capacity percentage to a percentage exceeding 70%, namely, set the mode of pore diameters to the range of from 0.5 to 1.8µm in order to improve the high rate discharge property more.

### (Test 2)

A discharge test under 0.2CA and 3.0CA was carried out with respect to each lithium-ion secondary battery of which average diameter of secondary particles in the positive electrode active material is different and which was manufactured according to Example 6. Each percentage (relative capacity percentage) of a discharge capacity measured at a 3.0CA discharge time to a discharge capacity measured at a 0.2CA discharge time was calculated.

As shown in Fig. 7, Example 6 in which each average diameter of secondary particles in the lithium manganate powder of a positive electrode active material is different exhibited that every relative capacity percentage is 50% or less when the average diameter of secondary particles is less than 20%. Every relative capacity percentage also exhibited a value close to 65 to 70% when the average diameter of secondary particles is 20% or more. As the average diameter of secondary particles becomes larger, a higher relative capacity percentage was exhibited. This is considered that, because a rate of a surface area to a volume of particles becomes smaller as the average diameter of secondary particles is larger, electron conductivity became higher, and accordingly the high rate discharge property was improved. Because the relative capacity percentage exhibited the value close to 65 to 70% when the average diameter of secondary particles is 20µm or more, it was found that a higher high rate discharge capacity can be obtained.

### (Test 3)

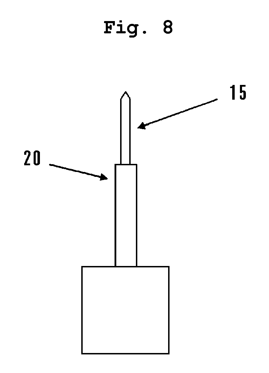

A nailing/collapse test was carried out to evaluate safety with respect to each lithium-ion secondary battery for evaluation of Example 7 and Control 1 each different in the mode of pore diameters at the positive electrode mixture. In the nailing/collapse test, as shown in Fig. 8, a nailing/collapse jig 20 equipped with a nail 15 made of ceramics having a diameter of 5mm φ was used, and the test was carried out under an environment temperature of 29 deg. C. The lithium-ion secondary battery was mounted on a flat bed, and then the nailing/collapse jig 20 stuck at a nailing speed of 1.6mm/s to the lithium-ion secondary battery from an upper direction of the battery. The highest end-point surface temperature was measured after the nailing/collapse, and it was judged whether or not a thermal runaway reaction was caused. Table 3 below shows the highest end-point surface temperature and the existence/nonexistence of the thermal runaway reaction.

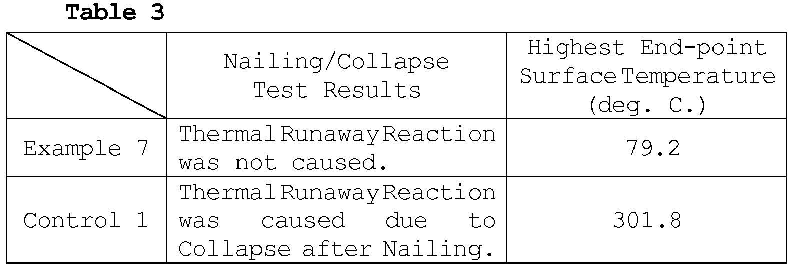

As shown in Table 3, the lithium-ion secondary battery of Control 1 in which the mode of pore diameters at the positive electrode mixture was set to 1.2µm caused a thermal runaway reaction according to the nailing of the nailing/collapse test and the highest end-point surface temperature reached 301.8 deg. C. By contrast, the lithium-ion secondary battery of Example 7 in which the mode of pore diameters at the positive electrode mixture was set to 1.3µm did not cause a thermal runaway reaction in the nailing/collapse test and the highest end-point surface temperature was 79.2 deg. C which is a remarkably low temperature comparing with the battery of Control 1. From this, it was found that burning can be restricted by mixing the flame retardant to the positive electrode mixture, but depending upon the mode of pore diameters, the thermal runaway reaction is likely to occur when physical force out of an exterior of the battery such as nailing acts on the battery, and the highest end-point surface temperature is also likely to reach a high temperature. Accordingly, it was found that, by setting the mode of pore diameters at the positive electrode mixture to 1.3µm or more, the thermal runaway reaction does not occur and the increase in the battery temperature can also be restricted.

Although a mechanism is still unclear with respect to a relationship between a mode of pore diameters and safety, the following is considered from the results in the nailing/collapse test carried out to each lithium-ion secondary battery of Example 7 and Control 1. Namely, it is considered that, by setting the mode of pore diameters at the positive electrode mixture large, a gap is increased to lower thermal conductivity. For this reason, it is considered that the thermal runaway reaction occurs locally and the thermal runaway reaction is difficult to extend to the entire positive electrode plate (positive electrode mixture), and accordingly safety can be improved. It is also considered that, in a case that the gap is increased by setting the mode of pore diameters large, because the amount of the electrolyte infiltrating the positive electrode mixture becomes large, thermal (calorific) capacity of the positive electrode mixture is increased to restrict a temperature increase, and accordingly safety can be improved. It is further considered that, in a case that the gap is increased by setting the mode of pore diameters large, because a discharging path for a gas generated due to battery abnormality is secured, the gas is easy to get out. Considering these totally, it is considered that safety was improved by setting the mode of pore diameters large, namely, setting it to 1.3µm or more.

### (Effects and the like)

Next, effects and the like of the lithium-ion secondary battery 1 according to this embodiment will be explained.

In this embodiment, the phosphazene compound as a flame retardant is mixed to the positive electrode mixture of the positive electrode plate 2 constituting the electrode group 5. The phosphazene compound exists near the positive electrode active material by mixing the flame retardant to the positive electrode mixture. When the lithium-ion secondary battery 1 is exposed under an abnormally high temperature environment or causes battery abnormality, a battery temperature increases to generate active species such as a radical and the like due to the thermal decomposition reaction of the positive electrode active material or a chain reaction thereof. The radical causes a termination reaction with the phosphazene compound to restrict the thermal decomposition reaction or the chain reaction. For this reason, burning of a battery constituting material is restricted to make battery behavior of the lithium-ion secondary battery 1 calm, and accordingly safety of the battery can be secured.

Further, in this embodiment, the phosphazene compound mixed to the positive electrode mixture is adjusted to fall into the range of from 2 to 6wt%. If the mixing percentage of thephosphazene compound is set large, safety can be secured. However, because the phosphazene compound has a property of low or non conductivity, electron conductivity at the positive electrode mixture drops. Namely, if the amount of the phosphazene compound is increased, the discharge capacity, especially the discharge capacity at the time of high rate discharge is lowered in the obtained lithium-ion secondary battery. By setting the amount of the phosphazene compound to the above stated range, not only the drop in electron conductivity but the lowering in battery performance can be restricted. Further, because the phosphazene compound mixed to the positive electrode mixture has a solid state at a room temperature, the phosphazene compound does not elute into the non-aqueous electrolyte at a charge/discharge time, and accordingly and effect on battery performance can be restricted.

Furthermore, in this embodiment, the flame retardant is mixed to the positive electrode mixture and the mode of pore diameters which are formed by the gaps between particles at the positive electrode mixture is set to the range of from 0.5 to 2.0µm. For this reason, even if the flame retardant is mixed to the positive electrode mixture, since movement paths for lithium-ions and electrons are secured, lithium-ions can sufficiently move between the positive and negative electrodes. Therefore, the drop in the discharge capacity can be restricted at a battery usage (charge/discharge) time, especially at a high rate discharge time and the high rate discharge property can be maintained. In a case that the mode of pore diameters at the positive electrode mixture is set larger than 2.0µm, a movement path for electrons is shattered (cut into pieces) to lower electron conductivity, thereby resistance is increased. By contrast, in a case that the mode of pore diameters is less than 0.5µm, the movement path for electrons becomes narrow, thereby resistance is increased. In short, because the flame retardant is an insulating material, a mixture density must to be set high in order to strengthen contact among particles of the positive electrode material and the like at the positive electrode mixture and contact between the particles and the electrode collector. In order to achieve this, there is a problem that the pore diameters formed at the positive electrode mixture must be set smaller comparing with the conventional positive electrode to which the flame retardant is not mixed. On the contrary, there is also a problem that ionic conductivity drops if the pore diameters are too small. In this embodiment, by solving these two problems, lowering in battery performance of the lithium-ion secondary battery in which the flame retardant is mixed to the positive electrode mixture is restricted. Besides, considering the evaluation results on the above stated Examples 1 to 5 totally, the high rate discharge property can be improved by setting the mode of pore diameters to the range of from 1.0 to 1.6µm.

Further, the following can be concluded with respect to the mode of pore diameters at the positive electrode mixture based upon the results of the above stated nailing/collapse test. Namely, even if the flame retardant is mixed to the positive electrode mixture and the mode of pore diameters is set to the range of from 0.5 to 2.0µm, battery behavior is likely to become violent in a case that physical force acts on the battery out of an exterior thereof. (See Example 7, Control 1.) By setting the mode of pore diameters to 1.3µm or more, the thermal runaway reaction is not caused even at the time of battery abnormality due to external force and safety of the battery can be improved. In other words, in order to restrict the drop in the capacity at the time of high rate discharge and in order to improve safety of the battery not only at the time that the battery is exposed under the abnormally high temperature environment but at the time of battery abnormality due to external force, it is preferable that the phosphazene compound mixed to the positive electrode mixture is set to the range of from 2 to 6wt% and the mode of pore diameters at the positive electrode mixture is set to the range of from 1.3 to 2.0µm. Moreover, considering that the drop in electron conductivity is restricted further and the high rate discharge property is improved, it is preferable that the mode of pore diameters is set to the range of from 1.3 to 1.6µm. (See Examples 1 to 5.)

Furthermore, in this embodiment, lithium manganese powder of which average diameter of secondary particles is 25µm, namely 20µm or more, is used as the positive electrode active material. By setting the average diameter of secondary particles of the positive electrode active material to 20µm or more, the rate of a surface area to a volume of particles of the positive electrode active material becomes small comparing with lithiummanganate powder of which average diameter of secondary particles is less than 20µm, and accordingly electron conductivity is increased and the high rate discharge property can be improved. (See Example 6.) Further, in this embodiment, the thickness of the positive electrode mixture is adjusted to the range of from 30 to 100µm as per one side of the positive electrode collector. For this reason, even if the positive electrode active material of which average diameter of secondary particles is 20µm or more is dispersed/mixed at the positive electrode mixture, the mode of pore diameters can be formed in the above stated range.

Incidentally, in this embodiment, an example that the flame retardant is mixed to the non-aqueous electrolyte at 15 volume% was shown, however, the present invention is not limited to this. No flame retardant may be mixed to the non-aqueous electrolyte. In a case that the flame retardant is mixed to the non-aqueous electrolyte, the non-aqueous electrolyte can be made non-flammable (flameproof) . Even if the non-aqueous electrolyte is leaked to an exterior of the battery, influence to the neighborhood can be restricted and acceleration in burning of other battery constituting materials can be controlled. The present invention is not limited particularly with respect to the mixing amount of the phosphazene compound to the non-aqueous electrolyte, however, nonflammability can be demonstrated sufficiently if the amount falls into the range of from 10 to 15 volume%.

Further, in this embodiment, an example that the positive electrode active material of which average diameter of secondary particles is 25µm is used was shown, however, the present invention is not limited to the same. The positive electrode active material of which average diameter of secondary particles is 20µm or more may be used. Because the positive electrode active material of which average diameter of secondary particles is 20µm or more is smaller in the rate of a surface area to a volume of particles comparing with lithium manganate powder of which average diameter of secondary particles is less than 20µm, electron conductivity is increased and a higher high rate discharge property can be exhibited. Further, it is preferable that the average diameter of secondary particles is smaller than the thickness of the above stated positive electrode mixture layer (30 to 100µm per side). If the thickness of the positive electrode mixture is less than 30µm, battery performance is lowered because the amount of the positive electrode mixture becomes small relatively. If the thickness of the positive electrode mixture exceeds 100µm, the movement of lithium-ions and electrons is likely to be hampered to the contrary. Accordingly, it is preferable to set the thickness of the positive electrode mixture to the above stated range. Further, in this embodiment, an example that the positive electrode mixture is formed at both sides of the positive electrode collector was shown, however the present invention is not confined to the same. The positive electrode mixture may be formed at one side of the positive electrode collector.

Furthermore, in this embodiment, an example that the non-aqueous electrolyte in which lithium tetrafluoroborate as a lithium salt is dissolved at the density ranging from 1.5 to 1.8M is used was shown, however the present invention is not limited to this. For example, lithium hexafluorophosphate may be used as a lithium salt. Lithium hexafluorophosphate is excellent in ionic conductivity, however, there is a case that it generates hydrogen fluoride at a charge/discharge time, which is likely to lower a life of the battery. By contrast, because lithium tetrafluoroborate does not generate halogen such as hydrogen fluoride or the like at a charge/discharge time, a life property of the battery can be improved. If the density of lithium tetrafluoroborate is smaller than 1.5M, ionic conductivity is not exhibited sufficiently because the number of movable lithium-ions lacks. To the contrary, if the density of lithium tetrafluoroborate is larger than 1.8M, a salt thereof deposits.

Moreover, in this embodiment, an example of lithiummanganate powder having a spinel crystal structure was shown as a lithium transition metal complex oxide used for a positive electrode active material, however, a lithium transition metal complex oxide in general may be used for the positive electrode active material of the present invention. The lithium manganate powder having a spinel crystal structure is excellent in electron conductivity and can make an energy density in a lithium-ion secondary battery higher relatively. Further, it is advantageous in that a crystal structure thereof is relatively stable, and that such lithiummanganate powder is excellent in safety, abundant as resources, and small in influence on the environment. Lithium manganate powder having a monoclinic crystal structure may be mixed to the lithium manganate powder having a spinel crystal structure. Besides, the present invention is not particularly limited to a kind of the negative electrode active material, composition of the non-aqueous electrolyte and the like.

Furthermore, in this embodiment, an example that the phosphazene compound having a solid state at a room temperature is used as a flame retardant mixed to the positive electrode mixture was shown, however the present invention is not limited to the same. A phosphazene compound which can restrict the thermal decomposition reaction of the active material or a chain reaction thereof at a predetermined temperature may be used. A phosphazene compound can be made halogen-free or antimony-free depending on kinds of substituents R¹, R², and such a phosphazene compound is excellent in anti-hydrolysis and thermal resistance.

Further, in this embodiment, an example of the 18650 typed (small type for civilian use) lithium-ion secondary battery was shown, however the present invention is not restricted to this. The present invention is applicable to a large sized lithium-ion secondary battery having a battery capacity exceeding about 3Ah. Furthermore, in this embodiment, an example of the electrode group 5 formed by winding the positive electrode plate and the negative electrode plate via the separator was shown, however the present invention is not limited to the same. For example, the electrode group may be formed by laminating rectangular positive electrode plates and negative electrode plates. Further, it is without saying that, with respect to a battery shape, a flat shape, a square shape or the like other than the cylindrical shape may be employed.

### (Industrial Applicability)

Because the present invention provides a lithium-ion secondary battery capable of securing safety at a time of battery abnormality and restricting a drop in a high rate discharge property, the present invention contributes to manufacturing and marketing of a non-aqueous electrolyte battery. Accordingly, the present invention has industrial applicability.

## Claims

1. A lithium-ion secondary battery that an electrode group which a positive electrode having a positive electrode mixture containing a positive electrode active material and a negative electrode having a negative electrode mixture containing a negative electrode active material are disposed via a separator is infiltrated by a non-aqueous electrolyte which a lithium salt is mixed into an organic solvent to be accommodated into a battery container, wherein a flame retardant is mixed to the positive electrode mixture, and wherein a mode of diameters of pores formed at the positive electrode mixture ranges from 0.5µm to 2.0µm.

2. The lithium-ion secondary battery according to claim 1, wherein the mode of diameters of pores formed at the positive electrode mixture ranges from 1.0µm to 1.6µm.

3. The lithium-ion secondary battery according to claim 1, wherein the positive electrode active material includes lithium manganate having a spinel crystal structure.

4. The lithium-ion secondary battery according to claim 3, wherein an average diameter of secondary particles in the positive electrode active material is 20µm or more.

5. The lithium-ion secondary battery according to claim 4, wherein the positive electrode plate has the positive electrode mixture at one side or both sides of a positive electrode collector, and wherein a thickness of the positive electrode mixture ranges from 30µm to 100µm per one side of the positive electrode collector.

6. The lithium-ion secondary battery according to claim 5, wherein the mode of diameters of pores formed at the positive electrode mixture ranges from 1.3µm to 1.6µm.

7. The lithium-ion secondary battery according to claim 1, wherein the flame retardant is a cyclic phosphazene compound having a solid state under a room temperature.

8. The lithium-ion secondary battery according to claim 7, wherein the phosphazene compound is mixed at a range of from 2wt% to 6wt% to the positive electrode mixture.

9. The lithium-ion secondary battery according to claim 1, wherein the lithium salt is lithium tetrafluoroborate, and wherein a density of the lithium salt ranges from 1.5M to 1.8M.
